# EUROPÄISCHE PATENTSCHRIFT

(11) **EP 1 264 527 B1**
(45) Veröffentlichungstag und Bekanntmachung des Hinweises auf die Patenterteilung: **01.03.2006**
(21) Anmeldenummer: 02100505.3
(22) Anmeldetag: 16.05.2002
(51) Int. Cl.: A01D 43/08

(54) **Halterungszusammenbau einer Gutbearbeitungs- und/oder Fördereinrichtung**
Holding assembly of a crop processing and/or conveying device
Groupement de fixation d'un arrangement pour traiter et convoyer des grains

(30) Priorität: 08.06.2001 DE 10128052
(43) Veröffentlichungstag der Anmeldung: 11.12.2002
(73) Patentinhaber: DEERE & COMPANY, Moline, Illinois 61265-8098 (US)
(72) Erfinder: Engel, Manfred, 66484 Grosssteinhausen (DE)
(74) Vertreter: Holst, Sönke

(56) Entgegenhaltungen:
- WO-A-01/37633
- DE-A- 3 119 954
- DE-A- 4 215 696
- DE-A- 19 638 034
- DE-B- 1 213 158
- US-A- 5 501 635
- US-A- 5 863 005

## Beschreibung

Die Erfindung betrifft einen Halterungszusammenbau einer Gutbearbeitungs- und/oder Fördereinrichtung, die im Halterungszusammenbau zwischen einer Betriebsstellung, in der die Gutbearbeitungs- und/oder Fördereinrichtung in einem von Erntegut durchströmbaren Kanal angeordnet ist, und einer Außerbetriebsstellung bewegbar gelagert ist, in der die Gutbearbeitungs- und/oder Fördereinrichtung außerhalb des Kanals angeordnet ist, wobei die Gutbearbeitungs- und/oder Fördereinrichtung mittels einer Arretierungseinrichtung in der Betriebsstellung und in der Außerbetriebsstellung arretierbar ist.

In der DE 196 03 928 A ist ein selbstfahrender Feldhäcksler offenbart, bei dem zwischen einem Häckselaggregat und einem Fördergebläse ein Kanal vorgesehen ist, in den alternativ eine Gutbearbeitungseinrichtung und eine Fördereinrichtung einfügbar sind. Auch besteht die Möglichkeit, den ansonsten leeren Kanal zu verschließen, um das Gut vom Häckselaggregat ohne Bearbeitung oder Förderung dem Fördergebläse zuzuführen. Die Gutbearbeitungseinrichtung und die Fördereinrichtung sind in Schienen beweglich gelagert und werden durch Bolzen oder Klemmmittel in den Schienen lagegesichert. Soll beispielsweise die Gutbearbeitungseinrichtung aus dem Kanal entnommen werden, wird zunächst der entsprechende, die Gutbearbeitungseinrichtung fixierende Bolzen gelöst. Dann wird die Gutbearbeitungseinrichtung in den Schienen mittels eines Seil- oder Kettenzugs nach oben bewegt. Dort wird sie wiederum durch Steckstifte oder reibschlüssige Klemmmittel an den Schienen fixiert. Als nachteilig ist dabei anzusehen, dass der Ein- oder Ausbau der Gutbearbeitungseinrichtung in den oder aus dem Kanal aufgrund der hohen Zahl der zu lösenden und zu befestigenden Klemmmittel relativ zeitaufwändig ist.

In der DE 42 15 696 A wird ein selbstfahrender Feldhäcksler beschrieben, bei dem eine Gutbearbeitungseinrichtung in einen zwischen Häckseltrommel und Fördergebläse angeordneten Kanal einfügbar ist. Die Gutbearbeitungseinrichtung ist schwenkbar oder verschiebbar gelagert und wird in ihrer Wirkstellung durch mindestens einen Verschluss, wie Hebelverschluss, Steck- oder Rastverschluss lagearretiert. Eine Arretierung der Gutbearbeitungseinrichtung in der Außerbetriebsstellung ist nicht offenbart.

Gutbearbeitungseinrichtungen, die zwischen einer Betriebsstellung und einer Außerbetriebsstellung beweglich sind, finden sich in Form von Strohhäckslern auch bei Mähdreschern. Beispielsweise ist in der DE 31 19 954 C ein Mähdrescher mit einem an der Rückseite angeordneten Strohhäcksler beschrieben, der um 180° verschwenkbar ist. Ein erster Verschluss dient zum Festhalten in der Betriebsstellung und ein zweiter Verschluss zum Halten in der Außerbetriebsstellung. Auch hier ist somit ein Verschluss zu lösen, der Strohhäcksler zu verschwenken und der andere Verschluss zu schließen, was die Bedienung umständlich macht.

Das der Erfindung zugrunde liegende Problem wird darin gesehen, eine Halterungseinrichtung zu schaffen, die eine Arretierung einer Förder- und/oder Gutbearbeitungseinrichtung in mehreren Positionen ermöglicht und einfach bedienbar ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf einen Halterungszusammenbau einer Gutbearbeitungs- und/oder Fördereinrichtung, die in ihrer Betriebsstellung und ihrer Außerbetriebsstellung arretierbar ist. Es wird vorgeschlagen, die Arretierungseinrichtung derart zu gestalten, dass sie in eine Stellung bringbar ist, in der sie gelöst ist, d. h. die Arretierung der Gutbearbeitungs- und/oder Fördereinrichtung aufgehoben ist, wobei die Arretierungseinrichtung in dieser Stellung gleichzeitig ein selbsttätiges Arretieren der Gutbearbeitungs- und/oder Fördereinrichtung in der jeweils anderen Stellung ermöglicht. Nach dem Betätigen der Arretierungseinrichtung kann die Gutbearbeitungs- und/oder Fördereinrichtung somit in an sich bekannter Weise, beispielsweise durch einen Seilzug oder mittels eines Ketten-, Zahnstangen- oder Schneckenantriebs, aus ihrer derzeitigen Stellung (Betriebs- oder Außerbetriebsstellung) in die jeweils andere Stellung (Außerbetriebsstellung oder Betriebsstellung) verbracht werden, da die Arretierungseinrichtung gelöst ist. Erreicht die Gutbearbeitungs- und/oder Fördereinrichtung die neue Stellung, wird sie dort durch die Arretierungseinrichtung selbsttätig arretiert.

Auf diese Weise reicht eine einzige Betätigung der Arretierungseinrichtung aus, um die Gutbearbeitungs- und/oder Fördereinrichtung zu lösen und selbsttätig zu arretieren, sobald sie die andere Stellung erreicht. Für den Bediener ist die Umstellung der Gutbearbeitungs- und/oder Fördereinheit zwischen Betriebsstellung und Außerbetriebsstellung somit wesentlich vereinfacht.

Erfindungsgemäß ist die Arretierungseinrichtung in einen Zustand verbringbar, der ein selbsttätiges Arretieren der Gutbearbeitungs- und/oder Fördereinrichtung in der jeweils gewünschten neuen Stellung erlaubt. Dazu kann ein Rastelement vorgesehen sein, das quer zur Richtung, in der sich die Gutbearbeitungs- und/oder Fördereinrichtung beim Verstellen zwischen der Betriebsstellung und Außerbetriebsstellung (bzw. umgekehrt) bewegt, beweglich ist. Das Rastelement ist außerdem in der genannten Richtung vorgespannt. Es wirkt mit einem Halteelement zusammen, um die Gutbearbeitungs- und/oder Fördereinrichtung zu arretieren. Die Arretierungseinrichtung ermöglicht somit ein Arretieren durch selbsttätiges Einrasten oder Einschnappen der Gutbearbeitungs- und/oder Fördereinrichtung. Dabei ist es beliebig, ob das Rastelement mit der Gutbearbeitungs- und/oder Fördereinrichtung bewegbar oder ortsfest am Halterungszusammenbau angebracht ist, und das Halteelement ortsfest bzw. bewegbar ist. Wenn die Arretierungseinrichtung gelöst ist, wird das Zusammenwirken von Halteelement und Rastelement durch äußere Einwirkung unterbunden, beispielsweise durch Abziehen des Rastelements vom Halteelement. Ist die Arretierungseinrichtung in dem ein selbsttätiges Arretieren erlaubenden Zustand, ist das Rastelement gegen die Vorspannung beweglich und kann in die Rastposition gelangen.

Beispielsweise kann die Arretierungseinrichtung einen mit der Halterungseinrichtung verbundenen Sperrbolzen als Rastelement aufweisen, der in eine entsprechende Vertiefung, Öffnung oder Aussparung der Gutbearbeitungs- und/oder Fördereinrichtung eingreift, wenn letztere in ihre Betriebs- bzw. Außerbetriebsstellung gelangt ist. Der Sperrbolzen kann auch mit der Gutbearbeitungs- und/oder Fördereinrichtung verbunden sein und in eine entsprechende Vertiefung, Öffnung oder Aussparung des Halterungszusammenbaus eingreifen. Im letztgenannten Fall wäre es sogar denkbar, mit nur einem Sperrbolzen auszukommen, wobei allerdings geeignete Maßnahmen zu treffen sind, um zu verhindern, dass der gelöste Sperrbolzen wieder einrastet, wenn sich die Gutbearbeitungs- und/oder Fördereinrichtung noch in ihrer ursprünglichen Position befindet.

Das Rastelement ist, wie bereits oben ausgeführt, in einen Zustand verbringbar, in dem ein selbsttätiges Arretieren der Gutbearbeitungs- und/oder Fördereinrichtung in ihrer jeweils anderen Stellung möglich ist. Die im vorigen Absatz genannten Lösungen, bei denen ein mit dem Halterungszusammenbau verbundenes, vorgespanntes Rastelement in eine Aussparung oder Öffnung der Gutbearbeitungs- und/oder Fördereinrichtung eingreift, erfordern, dass das Rastelement während des gesamten Wegs der Gutbearbeitungs- und/oder Fördereinrichtung an ihrer Oberfläche anliegt, da es anderenfalls mit der vorlaufenden Kante der Gutbearbeitungs- und/oder Fördereinrichtung kollidieren würde. Diese Lösung ist somit nachteilig, wenn der Weg der Gutbearbeitungs- und/oder Fördereinrichtung größer als ihre Länge ist. Außerdem kann das Einbringen einer Aussparung oder Öffnung in der Gutbearbeitungs- und/oder Fördereinrichtung aus Platzgründen problematisch sein. Zur Vermeidung dieser Nachteile ist vorgeschlagen, dass eine in der Bewegungsrichtung der Gutbearbeitungs- und/oder Fördereinrichtung orientierte schiefe Ebene vorhanden ist, die mit dem Rastelement zusammenwirkt. Das vorgespannte Rastelement befindet sich somit dann, wenn sich die Arretierungsvorrichtung in dem ein selbsttätiges Arretieren ermöglichenden Zustand befindet, in einer Stellung, die der Raststellung entspricht. Nähert sich die Gutbearbeitungs- und/oder Fördereinrichtung mit der über ihre Oberfläche hinausragenden schiefen Ebene, wird das Rastelement durch die schiefe Ebene sukzessive immer weiter gegen die Vorspannung von der Oberfläche der Gutbearbeitungs- und/oder Fördereinrichtung fort bewegt, bis es mit dem Halteelement zusammenwirkt und die Gutbearbeitungs- und/oder Fördereinrichtung arretiert. Das Halteelement ist zweckmäßigerweise an einem Ende der schiefen Ebene angeordnet und umfasst eine Vertiefung, in die das Rastelement eingreift.

Die Gutbearbeitungs- und/oder Fördereinrichtung ist in zwei Stellungen arretierbar, was durch ein erstes Rastelement, das die Gutbearbeitungs- und/oder Fördereinheit in der Betriebsstellung arretiert und durch ein zweites Rastelement, das die Gutbearbeitungs- und/oder Fördereinrichtung in der Außerbetriebsstellung arretiert, erfolgen kann. Das erste Rastelement und das zweite Rastelement können gemeinsam durch eine einzige Betätigungseinrichtung betätigbar sein. Insbesondere bietet es sich an, dass die Betätigungseinrichtung in eine erste Position und eine zweite Position verbringbar ist, wobei in der ersten Position das zweite Rastelement gelöst und in der zweiten Position das erste Rastelement gelöst ist. Ist die Betätigungseinrichtung in der ersten Position, kann die Gutbearbeitungs- und/oder Fördereinrichtung aus der Außerbetriebsstellung in die Betriebsstellung verbracht werden, da das zweite Rastelement gelöst ist, und wird in der Betriebsstellung selbsttätig verrastet, wie erläutert. Analog kann die Gutbearbeitungs- und/oder Fördereinrichtung aus der Betriebsstellung in die Außerbetriebsstellung verbracht werden, wenn die Betätigungseinrichtung in der zweiten Position ist, da dann das erste Rastelement gelöst ist, und in der Außerbetriebsstellung in der oben beschriebenen Weise selbsttätig verrastet werden. Die Bedienungsperson muss die Betätigungseinrichtung somit nur zwischen zwei Positionen verstellen, wobei die erste der Betriebsstellung der Gutbearbeitungs- und/oder Fördereinrichtung entspricht und die zweite der Außerbetriebsstellung.

Das Betätigungselement kann durch eine Welle mit den Rastelementen gekoppelt sein, die insbesondere durch einen Exzenter mit den Rastelementen verbunden ist. Es wäre aber auch denkbar, anstelle einer Welle ein linear bewegbares Verstellelement zu verwenden, das durch einen geeigneten Mechanismus mit den Rastelementen zusammenwirkt. Auch eine elektromagnetische Betätigung der Rastelemente wäre denkbar.

Die Erfindung kann an beliebigen Erntemaschinen Verwendung finden, bei denen ein Gutbearbeitungs- und/oder Förderelement zwischen einer Betriebsposition und einer Außerbetriebsposition bewegbar ist. Einsatzbeispiele sind Feldhäcksler mit Körnerprozessoren, Fördervorrichtungen bzw. mit Fördervorrichtungen zusammengekoppelten Körnerprozessoren, wie in der DE 196 03 928 A beschrieben, deren Offenbarung durch Bezugnahme hierin aufgenommen wird, und Mähdrescher, bei denen Strohhäcksler zwischen Schwadablage- und Häckselpositionen verbringbar sind. Bei Mähdreschern können auch Kaffstreuer zwischen Betriebs- und Außerbetriebspositionen bewegbar sein.

In der Zeichnung ist ein nachfolgend näher beschriebenes Ausführungsbeispiel der Erfindung dargestellt. Es zeigt:
- Fig. 1: eine Erntemaschine in Seitenansicht und in schematischer Darstellung;
- Fig. 2: eine seitliche Ansicht des Halterungszusammenbaus der Gutbearbeitungseinrichtung;
- Fig. 3: eine perspektivische Ansicht einer Schiene des Halterungszusammenbaus; und
- Fig. 4: einen vergrößerten Ausschnitt des Halterungszusammenbaus.

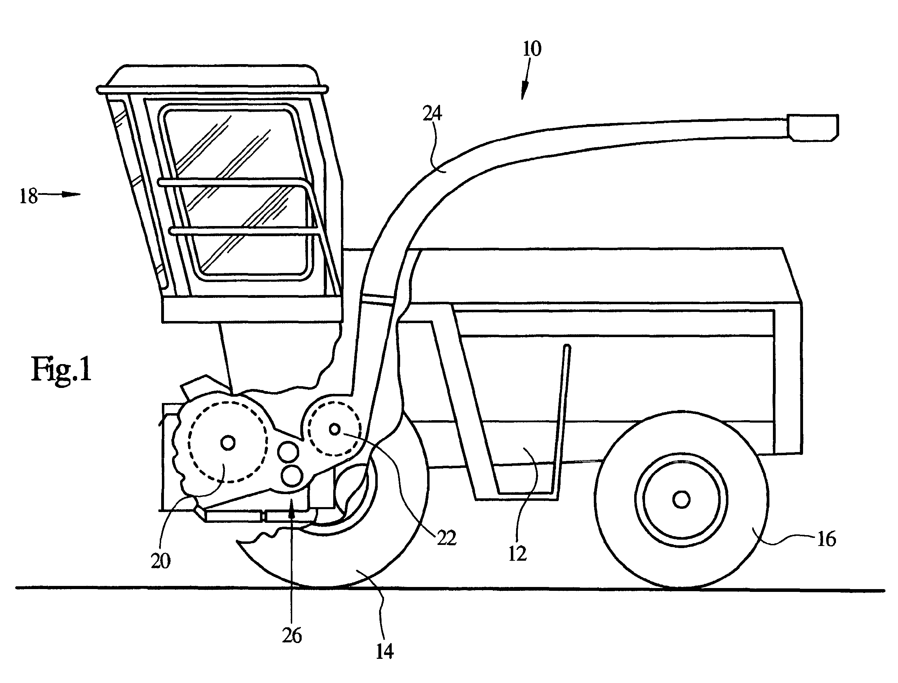

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine an der Vorderseite der Erntemaschine 10 angebrachte, in der Zeichnung nicht dargestellte Erntegutaufnahmevorrichtung einsehbar ist. Mittels der Erntegutaufnahmevorrichtung vom Boden aufgenommenes Gut, z. B. Mais, Gras oder dergleichen wird einer Häckseltrommel 20 zugeführt, die es in kleine Stücke häckselt und es einer Fördervorrichtung 22 aufgibt. Das Gut verlässt die Erntemaschine 10 zu einem nebenher fahrenden Anhänger über einen drehbaren Austragsschacht 24. Zwischen der Häckseltrommel 20 und der Fördervorrichtung 22 erstreckt sich eine Gutbearbeitungseinrichtung 26 in Form einer Nachzerkleinerungsvorrichtung, durch die das zu fördernde Gut der Fördervorrichtung 22 tangential zugeführt wird.

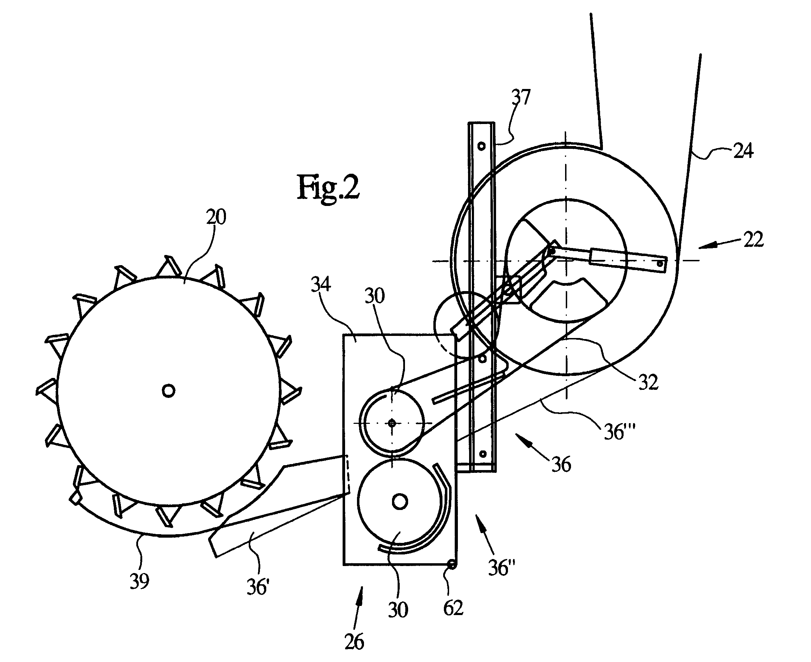

Die Gutbearbeitungseinrichtung 26 enthält gemäß den Figuren 1 und 2 zwei gewöhnlich in paarweiser Anordnung vorliegende Walzen 30, die auf ihrer Mantelfläche eine scharfkantige Kantenprofilierung aufweisen, wie es an sich bekannt ist. Beide Walzen 30 werden normalerweise mit geringfügig unterschiedlichen Drehzahlen angetrieben, wozu sich ein Zugmittel 32 von der oberen Walze 30 zu der Fördervorrichtung 22 und ein weiteres nicht gezeigtes Zugmittel in S-förmigem Verlauf um ebenfalls nicht gezeigte Scheiben oder Räder auf den Wellen der Walzen 30 erstreckt. Mit Blick auf die Zeichnungen dreht ein Rotor der Fördervorrichtung 24 und die obere Walze 30 entgegen dem Uhrzeigerdrehsinn und befördern auf diese Weise das von der Häckseltrommel 20 abgegebene Erntegut durch den Austragsschacht 24 aus der Erntemaschine 10. Beide Walzen 30 sind übereinander drehbar angeordnet und in nicht gezeigten Lagern drehbar in einem Gehäuse 34 angeordnet. Das Gehäuse 34 durchbricht einen sich von der Häckseltrommel 20 zu der Fördervorrichtung 24 bzw. dem Austragsschacht 24 erstreckenden Kanal 36, der an vier Seiten geschlossen ist und das zerkleinerte Erntegut leitet, und ist an seiner Unterseite geschlossen. Die als eine gesamtheitliche Komponente ausgebildete und in dem Gehäuse 34 untergebrachte Gutbearbeitungseinrichtung 26 ist in Schienen 37 vertikal beweglich gelagert und kann insbesondere mittels eines Seilzugs in eine in Figuren 1 gezeigte Betriebsstellung insbesondere für die Maisernte oder in eine nicht in den Figuren dargestellte Außerbetriebsposition hauptsächlich für die Grasernte nach oben verbracht werden. Die Schienen 37 sind seitlich an den Kanal 36 starr angebracht.

Der Kanal 36 lässt sich in drei Abschnitte untergliedern, und zwar einen vorderen, einen mittleren und einen rückwärtigen 36', 36" und 36"'. Der vordere Abschnitt schließt starr oder beweglich an die Häckseltrommel 20 an und stellt im Wesentlichen eine Fortsetzung der diese umgebenden Wandungen dar. Ein Blech 39 erstreckt sich durch den vorderen Abschnitt 36' bis zu der Vorderseite des Gehäuses 34, um das Gut optimal zu leiten. Der mittlere Abschnitt 36" kann wahlweise von einem nicht gezeigten einzufügenden Blechgehäuse oder der Gutbearbeitungseinrichtung 26 gebildet werden. Denkbar ist auch der Einbau einer Fördervorrichtung, wie in der DE 196 03 928 A offenbart. Je nach der Ausbildung des mittleren Abschnitts 36" kann in seinem Bereich die Unterseite des Kanals 36 mit einer nicht dargestellten Klappe verschlossen werden, die um ein Gelenk an dem rückwärtigen Abschnitt 36''' oder an dem Rahmen 12 vertikal verschwenkbar befestigt werden kann und in einer oberen Stellung den Kanal 36 von unten her schließt. Der rückwärtige Abschnitt 36''' ist direkt an einen Schacht des Austragschachts 24 angeschlossen und geht in dessen Wandungen stufenlos über.

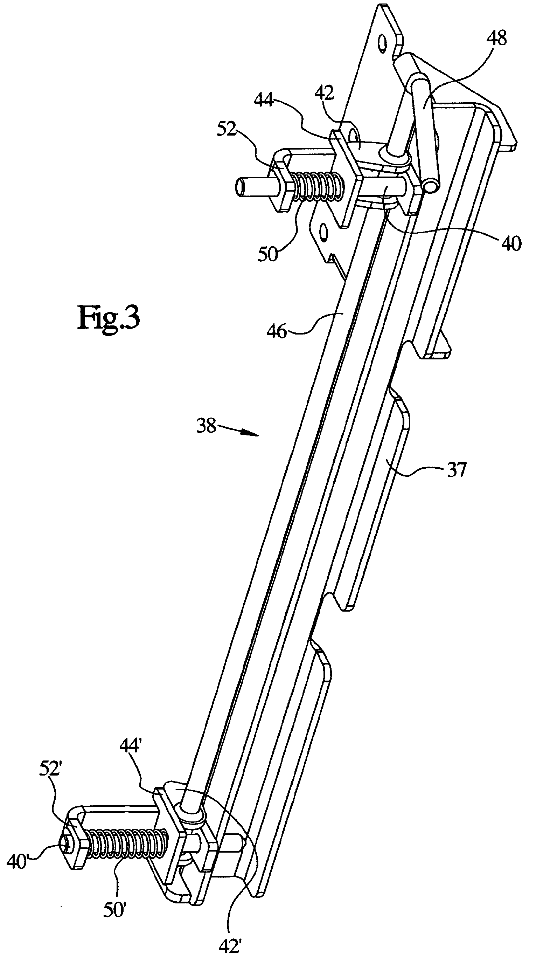

Figur 3 zeigt eine perspektivische Ansicht eines Halterungszusammenbaus 38 der Gutbearbeitungseinrichtung. Der Halterungszusammenbau 38 umfasst die U-förmige Schiene 37, in de die Gutbearbeitungseinrichtung 26 verschiebbar gelagert ist. Zur Arretierung der Gutbearbeitungseinrichtung 26 in der Betriebs- und der Außerbetriebsposition sind zwei bolzenförmige Rastelemente 40 vorgesehen, die in den Innenraum der Schiene 37 eindringen können. Ein erstes Rastelement 40 ist in der Nähe des unteren Endes der Schiene 37 angeordnet und ein zweites Rastelement 40' in der Nähe des oberen Endes der Schiene 37. Über obere und untere Exzenter 42, 42' und mit den Rastelementen 40, 40' verbundene Platten 44, 44' sind die Rastelemente 40, 40' mit einer sich vertikal erstreckenden Welle 46 gekoppelt, an deren oberen Ende ein um 90° abgewinkelter, horizontaler Handgriff 48 angeordnet ist. Die Rastelemente 40, 40' durchdringen Öffnungen in der Basisfläche der Schiene 37. Sie sind durch um sie umlaufende Schraubenfedern 50 in Richtung auf den von der Schiene 37 umschlossenen Innenraum hin vorgespannt und an ihren äußeren Enden in Lagerungen 52 verschiebbar gelagert, die mit der Schiene 37 starr verbunden sind. Die beiden Exzenter 42, 42' sind zueinander um 90° versetzt an der Welle 46 befestigt.

Die Welle 46 kann von einer Bedienungsperson zwischen der in Figur 3 dargestellten (ersten) Stellung, in der der Exzenter 42' in einer Position ist, in der die Schraubenfeder 50' entspannt ist und das erste Rastelement 40' durch die Schraubenfeder 50 in den Innenraum der Schiene 37 gedrückt wird und das zweite Rastelement 40 durch den Exzenter 42 gegen die Kraft der Schraubenfeder 50 aus dem Innenraum der Schiene 37 bewegt wurde, und einer (zweiten) Stellung bewegt werden, in der der Exzenter 42' das erste Rastelement 40' gegen die Kraft der Schraubenfeder 50' aus dem Innenraum der Schiene 37 herauszieht und die Schraubenfeder 50 das zweite Rastelement 40 in den Innenraum der Schiene 37 drückt, da der Exzenter 42 die Platte 44 nicht mehr nach außen drückt. Der Handgriff 48 ist somit bezüglich der Figur 3 im Gegenuhrzeigersinn um 90° drehbar.

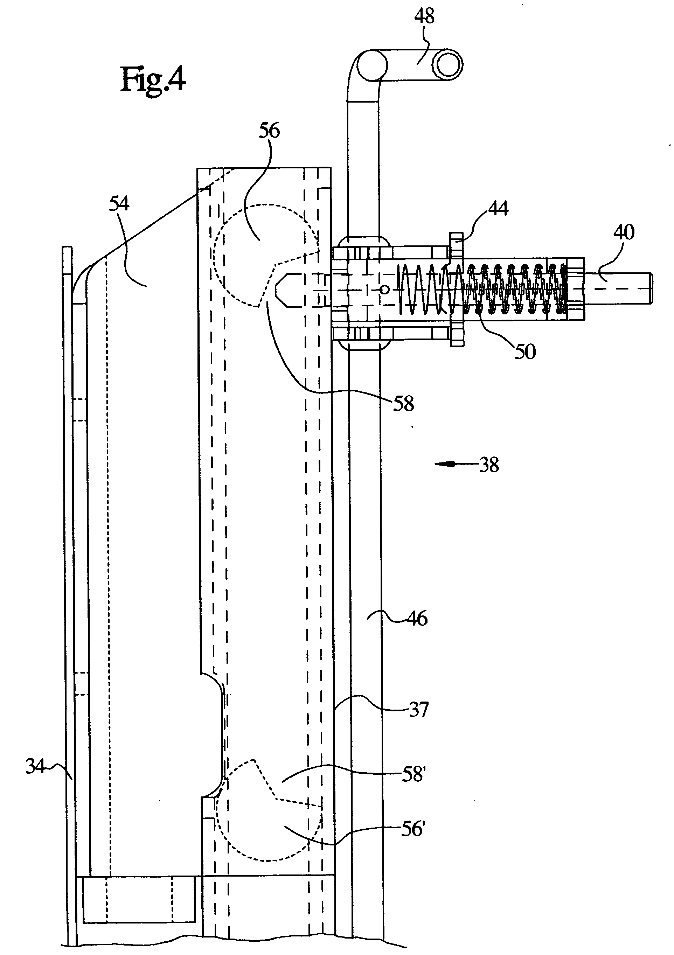

Figur 4 zeigt einen vergrößerten Ausschnitt des Halterungszusammenbaus, wobei sich die Gutbearbeitungseinrichtung 26 in der (oberen) Außerbetriebsposition befindet. Das Gehäuse 34 der Gutbearbeitungseinrichtung 26 ist mit einer Halterungsplatte 54 verbunden, die sich in den von der U-förmigen Schiene 37 umschlossenen Innenraum erstreckt. An der Halterungsplatte 54 ist ein oberes Halteelement 56 und ein unteres Halteelement 56' befestigt, die beide im Innenraum der Schiene 37 liegen. Das obere Halteelement 56 ist im Wesentlichen kreiszylindrisch, hat in seinem unteren, dem zweiten Rastelement 40 zugewandten Bereich 58 (d. h. in seinem vierten Quadranten) aber eine Ausnehmung, in welche die Spitze des zweiten Rastelements 40 eingreift. Das obere Halteelement 56 liegt somit auf der Oberseite des vorderen Bereichs des zweiten Rastelements 40 auf. Letzteres stützt das Halteelement 56 und die damit verbundene Gutbearbeitungseinrichtung 26 nach unten ab. Nach oben wird die Gutbearbeitungseinrichtung 26 durch die Schwerkraft gehalten. In Vorwärtsfahrtrichtung der Erntemaschine 10 und in seitlicher Richtung ist die Gutbearbeitungseinrichtung 26 durch die an der Schiene 37 anliegende Halterungsplatte 54 fixiert. In der Außerbetriebsstellung bildet vorzugsweise ein an der Unterseite des Gehäuses 34 der Gutbearbeitungseinrichtung 26 angebrachtes, in den Zeichnungen nicht dargestelltes Blechgehäuse den mittleren Abschnitt 36" des Kanals 36.

Das ebenfalls im Wesentlichen kreiszylindrische untere Halteelement 56' besitzt eine Ausnehmung 58' an seiner rechten oberen Seite (in seinem ersten Quadranten), in die sich die Spitze des ersten Rastelements 40' erstreckt, wenn die Gutbearbeitungseinrichtung 26 in der Betriebsstellung arretiert ist. In der Betriebsstellung wird die Gutbearbeitungseinrichtung 26 somit durch das erste Rastelement 40', das in die Ausnehmung 58' des unteren Halteelements 56' eingreift, nach oben arretiert. Da das Gehäuse 34 in der Betriebsstellung an einem an seiner Unterseite angeordneten Anschlag 62 anliegt (s. Figur 2), ist die Gutbearbeitungseinrichtung 26 in der Betriebsstellung nach oben und unten hin festgelegt. Es wäre auch denkbar, die dargestellten Rastelemente auf beiden Seiten (d. h. in Vorwärtsfahrtrichtung der Erntemaschine 10 links und rechts) der Gutbearbeitungseinrichtung 26 anzuordnen, und vorzugsweise durch einen geeigneten Mechanismus miteinander zu koppeln, so dass sie durch einen Bedienhebel betätigbar sind. Auch sind Rastelemente denkbar, die die Gutbearbeitungseinrichtung 26 gleichzeitig nach oben und unten arretieren; bei ihnen wäre die Ausnehmung 58 durch eine Öffnung (Bohrung) zu ersetzen.

Die Funktionsweise der Halterungsanordnung der Gutbearbeitungseinrichtung 26 ist nach Alledem folgendermaßen. Befindet sich die Gutbearbeitungseinrichtung 26 in der Betriebsposition, wie in Figur 2 dargestellt, und sind die Rastelemente 40, 40' der Halterungsanordnung in der Stellung, wie sie in Figur 3 dargestellt ist, wird die Gutbearbeitungseinrichtung 26 durch den Anschlag 62 nach unten und das in die Ausnehmung 58' eingreifende erste Rastelement 40' nach oben arretiert. Ein problemloser Erntebetrieb z. B. zur Maisernte ist möglich.

Soll die Gutbearbeitungseinrichtung 26 aus dem Kanal 36 entnommen werden, um anderes Gut zu ernten, dreht die Bedienungsperson den Handgriff 48 um 90° im Gegenuhrzeigersinn. Die Welle 46 verbringt den unteren Exzenter 42' in eine Stellung, in der die Platte 44' das Rastelement 40' aus der Ausnehmung 58' aushebt. Die Welle 46 verbringt gleichzeitig den oberen Exzenter 42 in eine Stellung, in der er die Platte 44 freigibt und das zweite Rastelement 40 durch Wirkung der Schraubenfeder 50 in den Innenraum der Schiene 37 eindringt. Da das erste Rastelement 40' das untere Halteelement 56' nicht mehr arretiert, kann die Gutbearbeitungseinrichtung 26 nach oben verbracht werden, was mittels eines Seilzugs und eines geeigneten Antriebs oder manuell erfolgt. Die obere, abgerundete Oberfläche des oberen Halteelements 56 wirkt als schiefe Ebene und drückt das zweite Rastelement 40 gegen die Kraft der Schraubenfeder 50 nach außen, sobald seine Spitze an ihr anliegt. Ist die Gutbearbeitungseinrichtung 26 so weit nach oben verbracht worden, dass die Spitze des oberen Rastelements 40 die Ausnehmung 58 erreicht, so dringt das Rastelement 40 durch Wirkung der Schraubenfeder 50 in die Ausnehmung 58 ein, was sich durch ein entsprechendes Geräusch bemerkbar macht. Die Gutbearbeitungseinrichtung 26 ist nun nach unten hin in der Außerbetriebsstellung arretiert.

Soll die Gutbearbeitungseinrichtung 26 wieder in die Betriebsstellung verbracht werden, ist sie zunächst durch den Seilzug bzw. das zu ihrem Anheben verwendete Zugmittel abzusichern bzw. geringfügig anzuheben, damit sie nicht nach Lösen der Arretierung des zweiten Rastelements 40 nach unten fällt bzw. sich in der Schiene 37 verkantet. Danach kann die Bedienungsperson den Handgriff 48 im Uhrzeigersinn nach rechts in die in Figur 3 dargestellte Position drehen. Der Exzenter 42 verbringt das zweite Rastelement 40 aus der Ausnehmung 58 des Halteelements 56. Gleichzeitig wird das erste Rastelement 40' in die in Figur 3 dargestellte Rastposition verbracht. Da die Arretierung der Gutbearbeitungseinrichtung 26 gelöst ist, kann letztere mittels des Seilzugs bzw. des jeweils benutzten Transportmittels in die Betriebsstellung abgesenkt werden. Die untere Oberfläche des unteren Halterungselements 56' drückt das erste Rastelement 40' nach Art einer schiefen Ebene zunächst gegen die Kraft der Schraubenfeder 50' nach außen, bis die Spitze des ersten Rastelements 40' durch die Schraubenfeder 50' in die Ausnehmung 58' des unteren Halteelements 56' gedrückt wird und die Gutbearbeitungseinrichtung 26 nach oben arretiert.

Die erfindungsgemäße Halterungsanordnung erlaubt somit, gleichzeitig die Arretierung der Gutbearbeitungseinrichtung 26 zu lösen und auf ein selbsttätiges Arretieren in der jeweils anderen Stellung der Gutbearbeitungseinrichtung 26 vorzubereiten.

## Patentansprüche

1. Halterungszusammenbau (38) einer Gutbearbeitungs- und/oder Fördereinrichtung (26), die im Halterungszusammenbau (38) zwischen einer Betriebsstellung, in der die Gutbearbeitungs- und/oder Fördereinrichtung (26) in einem von Erntegut durchströmbaren Kanal (36) angeordnet ist, und einer Außerbetriebsstellung bewegbar gelagert ist, in der die Gutbearbeitungs- und/oder Fördereinrichtung (26) außerhalb des Kanals (36) angeordnet ist, wobei die Gutbearbeitungs- und/oder Fördereinrichtung (36) mittels einer Arretierungseinrichtung in der Betriebsstellung und in der Außerbetriebsstellung arretierbar ist, **dadurch gekennzeichnet, dass** die Arretierungseinrichtung lösbar und gleichzeitig in einen Zustand bringbar ist, der ein selbsttätiges Arretieren der Gutbearbeitungs- und/oder Fördereinrichtung (26) in der jeweils anderen Stellung ermöglicht.

2. Halterungszusammenbau (38) nach Anspruch 1, **dadurch gekennzeichnet, dass** ein Rastelement (40) der Arretierungseinrichtung quer zur Bewegungsrichtung der Gutbearbeitungs- und/oder Fördereinrichtung (26) beweglich und vorgespannt ist und mit einem Halteelement (56) zusammenwirkt, wenn die Gutbearbeitungs- und/oder Fördereinrichtung (26) arretiert ist.

3. Halterungszusammenbau (38) nach Anspruch 2, **dadurch gekennzeichnet, dass** mit der Gutbearbeitungs- und/oder Fördereinrichtung (26) eine entlang der Bewegungsrichtung der Gutbearbeitungs- und/oder Fördereinrichtung (26) orientierte schiefe Ebene verbunden ist, die mit dem Rastelement (40) zusammenwirkt.

4. Halterungszusammenbau (38) nach Anspruch 3, **dadurch gekennzeichnet, dass** die schiefe Ebene dem Halteelement (56) benachbart ist.

5. Halterungszusammenbau (38) nach einem der Ansprüche 2 bis 4, **dadurch gekennzeichnet, dass** das Halteelement (56) eine Vertiefung oder Ausnehmung (58) aufweist.

6. Halterungszusammenbau (38) nach einem der Ansprüche 1 bis 5, **dadurch gekennzeichnet, dass** die Arretierungseinrichtung ein erstes Rastelement (40') und ein zweites Rastelement (40) aufweist, wobei die Gutbearbeitungs- und/oder Fördereinrichtung (26) mit dem ersten Rastelement (40') in der Betriebsstellung arretierbar und mit dem zweiten Rastelement (40) in der Außerbetriebsstellung arretierbar ist, und dass eine Betätigungseinrichtung (48) in eine erste Position und eine zweite Position verbringbar ist, wobei in der ersten Position das zweite Rastelement (40) gelöst ist und in der zweiten Position das erste Rastelement (40') gelöst ist.

7. Halterungszusammenbau (38) nach Anspruch 6, **dadurch gekennzeichnet, dass** das Rastelement (40, 40') mit einer Welle (46) gekoppelt ist, die durch das Betätigungselement (48) drehbar ist.

8. Halterungsanordnung (38) nach Anspruch 7, **dadurch gekennzeichnet, dass** das Rastelement (40, 40') durch einen Exzenter (42, 42') mit der Welle (46) gekoppelt ist.

9. Erntemaschine (10) mit einer Halterungsanordnung (38) nach einem der vorhergehenden Ansprüche.

10. Erntemaschine (10) nach Anspruch 9, **dadurch gekennzeichnet, dass** die Gutbearbeitungs- und/oder Fördereinheit (26) ein Körnerprozessor oder eine Fördervorrichtung oder ein Körnerprozessor ist, der mit einer Fördervorrichtung gekoppelt ist.

11. Erntemaschine (10) nach Anspruch 9, **dadurch gekennzeichnet, dass** die Gutbearbeitungs- und/oder Fördereinheit ein Kaffstreuer und/oder ein Strohhäcksler ist.

## Claims

1. A mounting assembly (38) of a crop processing and/or conveying device (26), which is mounted movably in the mounting assembly (38) between an operating position, in which the crop processing and/or conveying device (26) is arranged in a channel (36) which can be traversed by harvested crop, and an out of operation position, in which the crop processing and/or conveying device (26) is arranged outside the channel (36), wherein the crop processing and/or conveying device (26) can be arrested by means of an arresting device in the operating position and in the out of operation position, **characterized in that** the arresting device can be released and be brought simultaneously into a state which enables automatic arresting of the crop processing and/or conveying device (26) in the respective other position.

2. A mounting assembly (38) according to claim 1, **characterized in that** a detent element (40) of the arresting device is movable and biased transverse to the direction of movement of the crop processing and/or conveying device (26) and cooperates with a retaining element (56) when the crop processing and/or conveying device (26) is arrested.

3. A mounting assembly (38) according to claim 2, **characterized in that** an inclined plane orientated along the direction of movement of the crop processing and/or conveying device (26) is connected to the crop processing and/or conveying device (26) and cooperates with the detent element (40).

4. A mounting assembly (38) according to claim 3, **characterized in that** the inclined plane is adjacent the retaining element (56).

5. A mounting assembly (38) according to any of claims 2 to 4, **characterized in that** the retaining element (56) has a recess or opening (58).

6. A mounting assembly (38) according to any of claims 1 to 5, **characterized in that** the arresting device comprises a first detent element (40') and a second detent element (40), wherein the crop processing and/or conveying device (26) can be arrested by the first detent element (40') in the working position and by the second detent element (40) in the out of operation position, and **in that** an actuating device (48) can be brought into a first position and a second position, wherein the second detent element (40) is released in the first position and the first detent element (40') is released in the second position.

7. A mounting assembly (38) according to claim 6, **characterized in that** the detent element (40, 40') is coupled to a shaft (46) which can be turned by the actuating device (48).

8. A mounting arrangement (38) according to claim 7, **characterized in that** the detent element (40, 40') is coupled to the shaft (46) by an eccentric (42, 42').

9. A harvesting machine (10) with a mounting arrangement (38) according to any of the preceding claims.

10. A harvesting machine (10) according to claim 9, **characterized in that** the crop processing and/or conveying device (26) is a grain processor or a conveyor device or a grain processor which is coupled to a conveyor device.

11. A harvesting machine (10) according to claim 9, **characterized in that** the crop processing and/or conveying device (26) is a chaff spreader and/or a straw chopper.

## Revendications

1. Ensemble de fixation (38) d'un dispositif de traitement de récolte et/ou de transport (26), qui est logé de façon à pouvoir être déplacé entre une position de service, dans laquelle le dispositif de traitement de récolte et/ou de transport (26) est disposé dans un canal (36) pouvant être traversé par la récolte, et une position hors service, dans laquelle le dispositif de traitement de récolte et/ou de transport (26) est disposé à l'extérieur du canal (36), le dispositif de traitement de récolte et/ou de transport (26) pouvant être bloqué au moyen d'un système d'arrêt dans la position de service et dans la position hors service, **caractérisé en ce que** le système d'arrêt peut être débloqué et amené en même temps dans un état qui permet un arrêt automatique du dispositif de traitement de récolte et/ou de transport (26) dans l'autre position respective.

2. Ensemble de fixation (38) selon la revendication 1, **caractérisé en ce qu'**un élément d'encliquetage (40) du système d'arrêt est mobile et pré-tendu transversalement à la direction de déplacement du dispositif de traitement de récolte et/ou de transport (26) et agit conjointement avec un élément de retenue (56) lorsque le dispositif de traitement de récolte et/ou de transport (26) est arrêté.

3. Ensemble de fixation (38) selon la revendication 2, **caractérisé en ce qu'**un plan incliné, orienté le long du sens de déplacement du dispositif de traitement de récolte et/ou de transport (26), qui agit conjointement avec l'élément d'encliquetage (40), est relié au dispositif de traitement de récolte et/ou de transport (26).

4. Ensemble de fixation (38) selon la revendication 3, **caractérisé en ce que** le plan incliné est voisin de l'élément de retenue (56).

5. Ensemble de fixation (38) selon l'une quelconque des revendications 2 à 4, **caractérisé en ce que** l'élément de retenue (56) présente une cavité ou un évidement (58).

6. Ensemble de fixation (38) selon l'une quelconque des revendications 1 à 5, **caractérisé en ce que** le dispositif d'arrêt présente un premier élément d'encliquetage (40') et un second élément d'encliquetage (40), le dispositif de traitement de récolte et/ou de transport (26) pouvant être arrêté avec le premier élément d'encliquetage (40') dans la position de service et pouvant être arrêté avec le second élément d'encliquetage (40) dans la position hors service, et **en ce qu'**un système d'actionnement (48) peut être amené dans une première position et une seconde position, le second élément d'encliquetage (40) étant desserré dans la première position et le premier élément d'encliquetage (40') étant desserré dans la seconde position.

7. Ensemble de fixation (38) selon la revendication 6, **caractérisé en ce que** l'élément d'encliquetage (40, 40') est couplé avec un arbre (46) qui peut être mis en rotation par l'élément d'actionnement (48).

8. Ensemble de fixation (38) selon la revendication 7, **caractérisé en ce que** l'élément d'encliquetage (40, 40') est couplé par un excentrique (42, 42') à l'arbre (46).

9. Moissonneuse (10) avec un ensemble de fixation (38) selon l'une quelconque des revendications précédentes.

10. Moissonneuse (10) selon la revendication 9, **caractérisée en ce que** le dispositif de traitement de récolte et/ou de transport (26) est un processeur à grains ou un dispositif de transport ou un processeur à grains, qui est couplé avec un dispositif de transport.

11. Moissonneuse (10) selon la revendication 9, **caractérisée en ce que** le dispositif de traitement de récolte et/ou de transport (26) est un épandeur de résidus de battage et/ou un hache-paille.
